# EUROPEAN PATENT SPECIFICATION

(11) **EP 0 728 977 B1**
(45) Date of publication and mention of the grant of the patent: **08.12.1999**
(21) Application number: 95500022.9
(22) Date of filing: 27.02.1995
(51) Int. Cl.: F16L 25/00, F16L 37/084

(54) **Connection device for corrugated pipes**
Anschlussvorrichtung für Wellrohre
Dispositif de raccordement pour tubes ondulés

(43) Date of publication of application: 28.08.1996
(73) Proprietor: INTERFLEX, S.A., E-08110 Montcada i Reixac (ES)
(72) Inventor: Marre Burcet, Santiago, E-08370 Calella, Barcelona (ES)
(74) Representative: Ponti Sales, Adelaida

(56) References cited:
- EP-A- 0 465 896
- DE-A- 2 635 871
- DE-A- 4 334 529

## Description

The present invention refers to a connection device for corrugated pipes of the type used to protect electrical cables and in other similar applications.

### BACKGROUND OF THE INVENTION

Many devices exist for the connection of corrugated pipes, but in order to achieve good watertightness they have to be supplemented by sealing gaskets which complicate the assembly and make the device more expensive.

Notable amongst these devices are those which comprise, at least, two sleeve-like bodies, which are complementary and can be coupled together by screwing or another similar system, one of said bodies presenting flexible lugs with a tooth-shaped projection at its end, for anchoring into one of the ring-shaped grooves of the corrugated pipe, thanks to the gripping action which the other body exerts against the lugs.

As described above, this known devices require the assistance of a flexible gasket to ensure the watertightness of the joint. In other embodiments, the part provided with the flexible lugs also presents an internal tubular extension, around which are situated the lugs, leaving a gap between them and the extension, into which fits the end of the pipe to be jointed on. This type of connection device has the drawback that the tubular extension limits the possibilities of use of the device to pipes of a specific diameter, with no possibility of fitting to pipes of different diameters, while it also reduces the inner pitch of the pipes to be connected.

DE-A-4 334 529 discloses a connecting device which comprises two sleeve-like bodies, each moulded in a single piece and having a certain amount of flexibility, which are complementary and can be coupled to each other by threaded engagement or another similar system, one of said bodies having a plurality of flexible lugs with teeth-like projections at their ends, intended to remain secured in one of the ring-shaped grooves of a corrugated pipe due to the gripping action that the other body exerts against the lugs upon coupling with the first body. Said lugs extend inwards from a mouth of the body, and are arranged forming a circular crown spaced apart a certain distance from the inner side of the body, thus defining a ring-shaped gap, the inner diameter of said extension being smaller than the outer diameter of the crown formed by the lugs and its thickness being greater than the width of the ring-shaped gap, so that the cylindrical extension compresses the lugs against the outer surface of the corrugated pipe, thus keeping the tooth-shaped projections secured into one of the grooves thereof.

### DESCRIPTION OF THE INVENTION

The connection device of the invention has been designed to solve the disadvantages outlined. The device connects a corrugated pipe to a junction box with absolute mechanical security and watertightness, easily and without the need to use supplementary gaskets.

The connection device for corrugated pipes according to the invention is defined in the attached claim 1.

In a preferred embodiment, the body provided with the crown of lugs has an inwardly bevelled edge to guide the introduction of the pipe inside the body, and is provided on its outer surface with projections and recesses to assist its handling in rotation.

Advantageously, the body compressing the lugs around the pipe is provided with a polygonal nut-like outer surface.

Also advanteously, the two bodies are provided with a mutually retaining device which engages them loosely in an optimum operating position, and they are supplied for use in this engaged condition.

Preferably, the body provided with the crown of lugs on one end is provided with a slot on the other end, while the other body is provided with a projecting flexible tongue for engagement into said slot.

### BRIEF DESCRIPTION OF THE DRAWINGS

For a better understanding of all that is set out in the present specification, some drawings are attached which, solely by way of example, show a particular embodiment of the connection device.

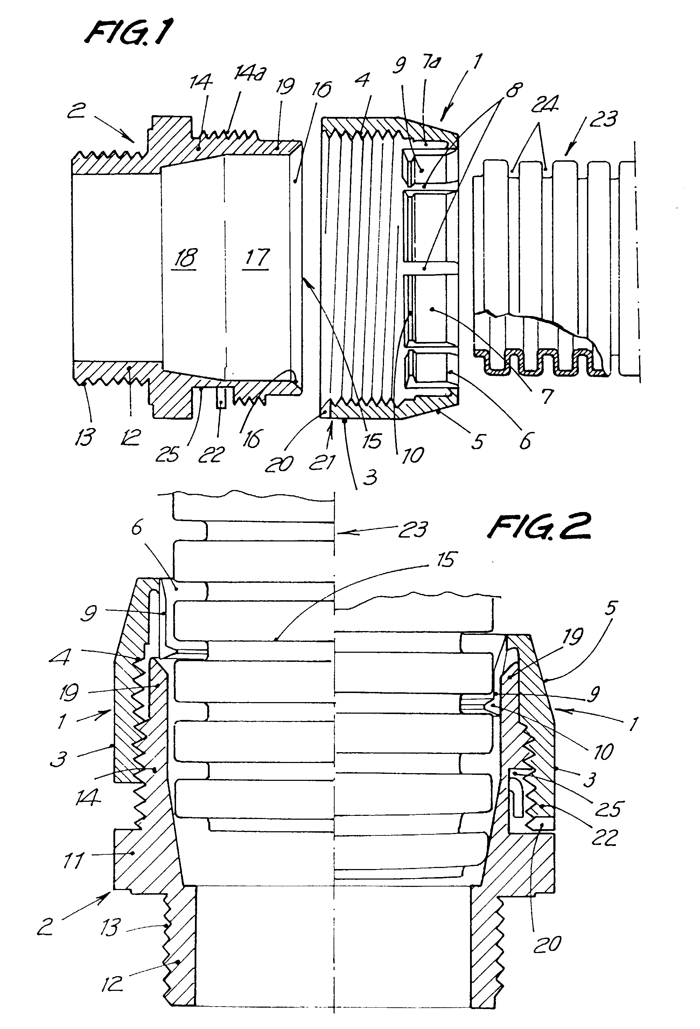

In the drawings, Figure 1 is a section in exploded form of the components of the device and the corrugated pipe; and Figure 2 is a section of the device with the components assembled in two positions, one with the pipe inserted therein but prior to applying the securing system, and the other with the securing system applied and the pipe fitted into the frusto-conical opening.

### DESCRIPTION OF A PREFERRED EMBODIMENT

The connection device consists in the drawings of two sleeve-like bodies, indicated by references 1 and 2, each moulded in a single piece and having a certain flexibility. The body 1 presents on the ouside a facetted form, with projections and recesses or the like, to facilitate its handling in rotation. This body comprises two sections: a cylindrical section 3 having an inner thread 4 and a frusto-conical section 5 having a bevelled mouth 6 from which departs inwards a cylindrical crown 7 provided with a plurality of transversal cuts 8 extending as far as the mouth 6, between which are formed a plurality of flexible lugs 9 with teeth-like projections 10 oriented towards the centre of the body 1. The lugs 9 are spaced apart from the inner side of section 5 of the body 1, thus leaving a ring-shaped gap 7a.

The body 2 includes an outer projection 11 of polygonal nut-like outline, to facilitate the fitting of a wrench. This projection divides the body 2 into two sections: a cylindrical section 12 with external thread 13 and a wider section 14 with external thread 14a complementary to the thread 4 of the body 1. Section 14 presents a mouth 15 whose edge has an internal bevel 16. Section 14 is provided on the inside with a cylindrical opening 17 and a frusto-conical opening 18. On the outside, section 14 presents at one end a threadless cylindrical extension 19, on which the mouth 15 with the bevel 16 is located. The inner diameter of the opening 17 and the extension 19 is smaller than the outer diameter of the crown 7 formed by the lugs 9. Moreover, the thickness of the cylindrical extension 19 is greater than the width of the ring-shaped gap 7a.

The body 1 is provided with a slot 20 on one edge 21 opposite the mouth 15. In turn, section 14 of the body 2 is provided with a flexible tongue 22 which projects radially from its outer surface.

In order to facilitate the use of the device, after their manufacture the bodies 1 and 2 are screwed on each other until the tongue 22 is engaged into the slot 20. In this position the two bodies are slightly secured to each other, thus avoiding their accidental displacement.

Furthermore, the cylindrical extension 19 has not yet been inserted into the ring-shaped gap 7a, so the lugs 9 yield under the pressure of the corrugated pipe, whose outer diameter is slightly greater than the inner diameter of the projections 10.

For its use the device has to be secured, using the thread 13, to the corresponding input for cables, and one end of the pipe 23 is then inserted through the bevelled mouth 6 of the body 1 until it reaches the frusto-conical opening 18; body 1 is then threaded on body 2, the tongue 22 yielding upon its housing in the cavity 25 while the tooth-shaped projections 10 are inserted in one of the grooves 24 of the pipe 23, so that the latter advances with longitudinal movement; this makes the pipe 23 penetrate more fully into the body 1, while its end rests under pressure in the frusto-conical opening 18, because the teeth 10 of the lugs 9 push it axially. Furthermore, the lugs 9 close like clamps around the pipe 23 because the cylindrical extension 19 which penetrates into the ring-shaped gap 7a moves them with a radial closure movement.

The pipe is thus secured in a totally watertight manner and is resistant to tensile stresses. This embodiment makes utilization of an additional gasket around the pipe unnecessary, although it is possible to place such a gasket in one of the grooves 24 of pipe 23 inserted in the cylindrical 17 or frusto-conical 18 openings of the piece 2.

In addition to these advantages, this device has the special feature that upon unscrewing of the body 1 the pipe 23 is withdrawn from the body 2, due to the axial recession of the body 1 and, therefore, of the lugs 9, thus facilitating the operation of disassembling said pipe 23.

It is also important to stress that the connection device can be applied to pipes of different diameters, within certain limits, thanks to the flexibility of the lugs 9 and the frusto-conical opening 18, which compensate for small diameter differences of the pipes. Moreover, the absence in the interior of the bodies 1 or 2 of coaxial tubular extensions intended to be inserted inside the pipe to be connected avoids a reduction in the capacity of the latter.

## Claims

1. Connection device for corrugated pipes, comprising at least two sleeve-like bodies (1, 2), each moulded in a single piece and having a certain amount of flexibility, which are complementary and can be coupled to each other by threaded engagement or another similar system, one of said bodies (1) having a plurality of flexible lugs (9) with teeth-like projections (10) at their ends, intended to remain secured in one of the ring-shaped grooves (24) of a corrugated pipe (23) due to the gripping action that the other body (2) exerts against the lugs upon coupling with the first body (1), said lugs (9) extending inwards from a mouth (6) of the body (1), and are arranged forming a circular crown (7) spaced apart a certain distance from the inner side of the body (1), thus defining a ring-shaped gap (7a), the other body (2) having a frustoconical opening (18) and a cylindrical extension (19) with a bevelled edge (16) to assist its insertion under pressure into said gap (7a), the inner diameter of said extension (19) being smaller than the outer diameter of the crown (7) formed by the lugs (9) and its thickness being greater than the width of the ring-shaped gap (7a), so that the cylindrical extension (19) compresses the lugs (9) against the outer surface of the corrugated pipe (23), thus keeping the tooth-shaped projections (10) secured into one of the grooves (24) thereof, the tooth-shaped projections (10) keeping secured into one of the grooves (24) in order to move the end of the pipe towards the frustoconical opening (18), against which it fits forming a watertight seal, as the two sleeve-like bodies (1, 2) are engaged.

2. Connection device as claimed in claim 1, characterized in that said body (1) provided with the crown (7) of lugs (9) has an inwardly bevelled edge (6) to guide the introduction of the pipe (23) inside the body, and is provided on its outer surface with projections and recesses to assist its handling in rotation.

3. Connection device for corrugated pipes, as claimed in Claim 1, characterized in that the body (2) compressing the lugs (9) around the pipe (23) is provided with a polygonal nut-like outer surface (14).

4. Connection device for corrugated pipes, as claimed in Claim 1, characterized in that said two bodies (1,2) are provided with a mutually retaining device (20, 22) which engages them loosely in an optimum operating position, and in that they are supplied for use in this engaged condition.

5. Connection device for corrugated pipes, as claimed in Claims 1 and 4, characterized in that the body (1) provided with the crown (7) of lugs (9) on one end is provided with a slot (20) on the other end, while the other body (2) is provided with a projecting flexible tongue (22) for engagement into said slot (20).

## Patentansprüche

1. Anschlußvorrichtung für Wellrohre mit wenigstens zwei hülsenförmigen Körpern (1, 2), von denen jeder als einstückiges Teil geformt ist und eine gewisse Flexibilität aufweist, wobei die Körper komplementär sind und aneinander mittels eines Gewindeingriffs oder eines anderen ähnlichen Systems kuppelbar sind, wobei einer der Körper (1) zahlreiche flexible Zungen (9) mit zahnähnlichen Anformungen (10) an deren Enden aufweist, die zum gesicherten Verbleiben in einer der ringförmigen Nuten (24) eines Wellrohres (23) aufgrund der Greifwirkung, die der andere Körper (2) gegen die Zungen beim Kuppeln mit dem ersten Körper (1) ausübt, dienen, wobei sich die Zungen (9) von einer Öffnung (6) des Körpes (1) nach innen erstrecken und zur Bildung einer kreisförmigen Krone (7) angeordnet sind, die um eine bestimmte Entfernung von der Innenseite des Körpers (1) zwecks Bildung eines ringförmigen Spaltes (7a) beabstandet sind, wobei der andere Körper (2) eine kegelstumpfförmige Öffnung (18) und einen zylindrischen Fortsatz (19) mit einem abgefasten Rand (16) zur Unterstützung des Eindrückens in den Spalt (7a) aufweist, wobei der Innendurchmesser des Fortsatzes (19) kleiner als der Außendurchmesser der von den Zungen (9) gebildeten Krone (7) ist, und wobei dessen Dicke größer als die Breite des ringförmigen Spaltes (7a) derart ist, daß durch den zylindrischen Fortsatz (19) die Zungen (9) gegen die Außenfläche des Wellrohres (23) zum Befestigen der zahnförmigen Anformungen in einer von dessen Nuten (24) haltbar ist, wobei die zahnförmigen Anformungen (10) nach dem Eingriff der beiden hülsenförmigen Körper (1, 2) zum Bewegen des Rohrendes in Richtung auf die kegelstumpfförmige Öffnung (18) zur Bildung einer wasserdichten Dichtung fest gesichert in einer der Nuten (24) verbleiben.

2. Anschlußvorrichtung nach Anspruch 1, dadurch gekennzeichnet, daß der Körper (1), der mit der Krone (7) aus Zungen (9) versehen ist, zur Führung des Einsetzens des Rohrs (23) in das Innere des Körpers einen nach innen abgeschrägten Rand (6) aufweist und an seiner Außenfläche mit Anformungen und Ausnehmungen zur Unterstützung seiner Handhabung bei der Drehung versehen ist.

3. Anschlußvorrichtung für Wellrohre nach Anspruch 1, dadurch gekennzeichnet, daß der körper (2), der die Zungen (9) um das Rohr (23) zusammendrückt, mit einer polygonalen mutterähnlichen Außenfläche (14) versehen ist.

4. Anschlußvorrichtung für Wellrohre nach Anspruch 1, dadurch gekennzeichnet, daß die beiden Körper (1, 2) mit einer dieser lose in einer optimalen Betriebsstellung wechselseitig im Eingriff haltenden Einrichtung (20, 22) versehen sind, und daß die Körper in diesem Eingriffszustand zur Verfügung stehen.

5. Anschlußvorrichtung für Wellrohre nach Anspruch 1 und 4, dadurch gekennzeichnet, daß der Körper (1), der mit der Krone (7) aus Zungen (9) an einem Ende versehen ist, an dem anderen Ende einen Schlitz (20) aufweist, während der andere Körper (2) mit einer vorstehenden flexiblen Zunge (22) zum Eingriff in den Schlitz (20) versehen ist.

## Revendications

1. Dispositif de connexion pour tuyaux ondulés, comportant au moins deux corps analogues à un manchon (1, 2) moulés chacun en une seule pièce et ayant une certaine degré de souplesse, qui sont complémentaires et peuvent être reliés l'un à l'autre par prise vissée ou autre système similaire, un premier desdits corps (1) ayant une pluralité de pattes souples (9) munies de saillies analogues à des dents (10) à leurs extrémités, prévues pour rester fixées dans l'une des gorges en forme d'anneau (24) d'un tuyau ondulé (23) du fait de l'action de saisie que l'autre corps (2) exerce contre les pattes lors de l'accouplement avec le premier corps (1), lesdites pattes (9) s'étendant vers l'intérieur à partir d'une embouchure (6) du corps (1), et étant agencées en formant une couronne circulaire (7) écartée d'une certaine distance à partir du côté intérieur du corps (1), définissant ainsi un espace en forme d'anneau (7a), l'autre corps (2) ayant une ouverture tronconique (18) et un prolongement cylindrique (19) ayant un bord biseauté (16) pour aider à son insertion sous pression dans ledit espace (7a), le diamètre intérieur dudit prolongement (19) étant plus petit que le diamètre extérieur de la couronne (7) formée par les pattes (9) et son épaisseur étant plus grande que la largeur de l'espace en forme d'anneau (7a), de sorte que le prolongement cylindrique (19) comprime les pattes (9) contre la surface extérieure du tuyau ondulé (23), en maintenant ainsi les saillies en forme de dent (10) fixées dans une des gorges (24) de celui-ci, les saillies en forme de dent (10) restant fixées dans l'une des gorges (24) afin de déplacer l'extrémité du tuyau en direction de l'ouverture tronconique (18), contre laquelle il est agencé en formant un joint étanche à l'eau, lorsque les deux corps analogues à un manchon (1, 2) sont mis en prise.

2. Dispositif de connexion selon la revendication 1, caractérisé en ce que ledit corps (1) muni de la couronne (7) de pattes (9) a un bord biseauté vers l'intérieur (6) pour guider l'introduction du tuyau (23) à l'intérieur du corps, et est muni sur sa surface extérieure de saillies et d'évidements pour aider à sa manipulation en rotation.

3. Dispositif de connexion pour tuyaux ondulés, selon la revendication 1, caractérisé en ce que le corps (2) comportant les pattes (9) situées autour du tuyau (23) est muni d'une surface extérieure analogue à un écrou polygonal (14).

4. Dispositif de connexion pour tuyaux ondulés, selon la revendication 1, caractérisé en ce que lesdits deux corps (1, 2) sont munis d'un dispositif de retenue mutuelle (20, 22) qui les met en prise de manière lâche dans une position de fonctionnement optimum, et en ce qu'ils sont fournis à l'utilisation dans cet état de mise en prise.

5. Dispositif de connexion pour tuyaux ondulés, selon les revendications 1 et 4, caractérisé en ce que le corps (1) muni de la couronne (7) de pattes (9) sur une première extrémité est muni d'une fente (20) sur l'autre extrémité, alors que l'autre corps (2) est muni d'une languette souple faisant saillie (22) destinée à venir en prise dans ladite fente (20).
